# EUROPEAN PATENT APPLICATION

(11) **EP 1 681 748 A2**
(43) Date of publication of application: **19.07.2006**
(21) Application number: 06270005.9
(22) Date of filing: 17.01.2006
(51) Int. Cl.: H01R 31/08

(54) **Improvements relating to Electrical Link Boxes**

(30) Priority: 18.01.2005 GB 0500958; 07.09.2005 GB 0518260
(71) Applicant: Tyco Electronics UK Limited, Swindon, Wiltshire SN3 5HH (GB)
(72) Inventor: Dockray, John, DE12 6DL, Nr SWADLINCOTE (GB)
(74) Representative: Jones, Stephen Anthony

(57) **Abstract**

A link box (10) for connecting electricity cables is disclosed. The link box comprises an enclosure and a link assembly (40,140) mounted within the enclosure. The link assembly (40,140) comprises a plurality of terminal pairs (43,143) to which ends of the cables are, in use, connected, and a plurality of upstanding spigot pairs (45,145) between which mechanical linkages (70) may, in use, be applied to connect the cables. Furthermore, the link box (10) includes a barrier unit (50) that is engageable with the link assembly (40,140). The barrier unit (50) is configured to surround the plurality of upstanding spigot pairs (45,145) and any mechanical linkages (70) that are, in use, present, and to provide a non-electrically conducting barrier between the spigot pairs (45,145) and mechanical linkages (70).

## Description

This invention relates to a so-called "link box", that is to say to a unit intended for installation in an electrical supply cable or cables so as to permit temporary interruption of current flow along that cable or cables. In particular, the invention relates principally to link boxes of the "untailed" type which are filled, in use, with an insulating resin.

Link boxes are widely used where it is desired temporarily to interrupt the supply of electric current in a cable or cables, typically a three-phase AC mains supply. Such boxes are commonly installed in underground chambers in roadways or other paved areas. In the simplest case, the link box is interposed between two parts of a cable and serves to either permit or interrupt the flow of current along the cable. In such a case, the link box contains two sets of terminals, for the individual cores of the two parts of the cable, and a set of mechanical links are used to connect the corresponding terminals to complete the current path. Physical removal of the link interrupts the flow of current. The links themselves are accommodated within a link housing inside the link box. The link housing accommodates pairs of spigots that, in use, can be connected together by the mechanical links, and connecting members that extend from the lower ends of the spigots through the walls of the link housing and are connected to the terminals externally of the link housing. The link housing normally takes the form of an open-topped well that is partially filled with resin so that only the upper ends of the spigots project from the resin, the lower ends of the spigots and their connections to the connecting members being encased in the resin.

Some link boxes are supplied as pre-assembled units complete with cable "tails" that are then connected to underground cables externally of the link box. Other link boxes are referred to as "untailed", the underground cables being connected directly to the terminals in the link box. For the majority of applications, it is untailed link boxes that are preferred. In the installation of such an "untailed" link box, after the cables have been connected, it is customary for the terminals to be encapsulated in an insulating material, commonly referred to as "potting resin", which cures within the link box and insulates the terminals from the environment and from each other. An assembled link box of this kind is thus substantially filled with resin, a first body of resin filling the lower part of the link housing and a second body of resin filling the link box externally of the link housing.

A problem that is encountered with such link boxes is that cracks may occur at the interface between the potting resin and the link housing. This interface is often cracked or moved after the setting of the potting resin and this can allow the ingress of moisture at the interface. Leak paths may therefore be formed between the phases of the electricity cable, which is highly undesirable. Also, because the terminals to which the cable ends are connected are in turn connected to the connecting members, which are in turn connected to the spigots inside the link housing, there are a relatively large number of connections. This increases the potential for fault conditions to develop, as well as degrading the electrical performance of the link box.

There has now been devised a link box which overcomes or substantially mitigates the above-mentioned and/or other disadvantages of the prior art.

According to the present invention, there is provided a link box for connecting electricity cables, the link box comprising
an enclosure,
a link assembly mounted within said enclosure, said link assembly comprising a plurality of terminal pairs to which ends of the cables are, in use, connected, and a plurality of upstanding spigot pairs between which mechanical linkages may, in use, be applied to connect the cables, and
a barrier unit engageable with said link assembly, the barrier unit being configured to surround said plurality of upstanding spigot pairs and any mechanical linkages that are, in use, present, and to provide a non-electrically conducting barrier between said spigot pairs and mechanical linkages.

The link box according to the present invention is advantageous primarily in that the cables that are to be connected can be connected directly to the terminal pairs and the barrier unit can then be engaged with the link assembly. The enclosure may then be filled with resin which, when cured, forms a single unitary body of resin that encapsulates the cable ends, the connections of the cable ends to the terminal pairs, and the lower part of the barrier unit.

The barrier unit provides a physical, non-conducting barrier between the upper parts of adjacent spigot pairs that project from the unitary body of resin. The fact that a single body of resin extends through the whole interior of the enclosure means that there is a greatly reduced likelihood of cracks or the like developing, ingress of moisture into which may lead to short circuits. Also, because the cable ends are connected directly to the terminal pairs, rather than to intermediate components that extend through the wall of a link housing, the electrical performance of the link box may be better than that of conventional link boxes. The absence of a separate pre-assembled link housing also enables the overall size of the link box to be reduced, leading to greater ease of installation.

Furthermore, the features of the terminal pairs and spigot plate pairs forming part of a link assembly, and a barrier unit being provided that is engageable with that link assembly, greatly simplify the assembly and installation of the link box relative to prior art link boxes. This makes the link box according to the invention suitable for supply as a link box of the "untailed" type, such that underground cables are connected directly to the terminals of the link box, and the link box is filled with insulating resin, on-site.

The enclosure is preferably formed in two components: a base and an upper component. Both components are preferably formed in plastics material, eg by injection moulding or, more preferably, by vacuum forming. The two components preferably cooperate to define openings at each end of the enclosure through which the cables that are to be connected by the link box extend. The enclosure preferably also has an enlarged central portion within which the link assembly is accommodated. It is preferred that at least the upper component be formed in material that is at least partially transparent, so that the interior of the link box may be viewed through the enclosure (enabling, for example, inspection of the connections prior to filling of the enclosure with resin).

The upper component preferably has a generally central aperture through which, in the assembled link box, the barrier unit protrudes. The upper component preferably also has one or more fill openings through which resin may be poured.

The base preferably has the form of a tray, with a continuous, uninterrupted lower surface, so that the tray retains resin that is poured into the enclosure. The openings for the cables at each end of the enclosure preferably receive the cables with a sufficiently close fit that substantial leakage of resin is prevented. The end portions of the base and upper component are preferably formed so that they define openings of gradually or stepwise reducing diameter, so that by trimming of the ends of the components openings can be created that are appropriate for the particular cables being connected.

The link assembly preferably comprises a support of highly non-conductive material, most preferably a plastics material. The terminal pairs and upstanding spigot pairs are mechanically fastened to the support, and the support is preferably fixed to the base component of the enclosure. The spigots preferably take the form of flat bars, the major surfaces of which are arranged parallel to the longitudinal axis of the link box. The lower ends of the spigots are preferably connected directly to the terminals, each of which most preferably comprises a socket within which an end of a cable may be mechanically fastened. Most preferably, the end of the cable is fastened by means of a threaded clamping bolt, which most preferably has a head that shears off upon application of a predetermined torque.

The barrier unit is formed in an electrically non-conducting material, again most preferably a plastics material. The barrier unit is preferably formed by injection moulding. The barrier unit is preferably substantially rigid. One suitable class of material from which the barrier unit may be formed is fibre-reinforced plastics, eg glass fibre-reinforced polypropylene.

The barrier unit is dimensioned and configured to surround the spigot pairs and to provide insulating partitions between spigot pairs. The barrier unit preferably takes the form of a hollow, rectangular body, with open upper and lower faces and with transverse partitions that divide the interior of the body into a plurality of compartments. In the case of a link box for the connection of three-core cables, for example, the body will be divided into three compartments, each compartment accommodating the spigots of one upstanding spigot pair.

The barrier unit is preferably engageable with the link assembly with a snap or clip fit. To achieve this, the barrier unit is preferably provided with a plurality of legs, most conveniently four legs, that depend downwardly from the body. The ends of the legs preferably cooperate with suitable formations on the link assembly, most preferably on the support, to secure the barrier unit to the link assembly. Most conveniently, the ends of the legs are formed with inwardly projecting lugs that engage the support with a snap or clip fit. Some or all of the lugs may locate in corresponding openings or recesses in the support. The legs are preferably sufficiently flexible to permit the snap fit engagement of the legs with the support by the application of downward pressure on the barrier unit, yet sufficiently rigid that the barrier unit is substantially immobile in normal use.

The length of the legs that depend downwardly from the body of the barrier unit is preferably such that, when the barrier unit has been engaged with the link assembly, the body is positioned such that, when the enclosure is filled with resin, the resin encapsulates the lower part of the body, but the greater part of the body protrudes from the resin.

The link box may also contain a pair of terminals for combined neutral and earth (CNE) conductors, which are commonly multi-stranded conductors that surround the live conductors of a three-phase cable, between those conductors and the outer insulation of the cable. Such terminals are preferably fixed to the link assembly, particularly to the support of that assembly, but may be located externally of the barrier unit when the barrier unit is engaged with the link assembly.

The link box preferably further comprises, as is conventional, a lid that fits over the projecting part of the barrier unit and rests upon the upper surface of the enclosure. The lid is preferably cast in iron (or any other suitably heavy material) so that, by virtue of its weight, it remains securely in place during use and is not lifted, eg by water in the event that the chamber within which the link box is fitted becomes flooded.

Preferred embodiments of the link box according to the invention thus comprise several major components, and according to a further aspect of the invention there is provided a kit of parts for the assembly of a link box, the kit of parts comprising
an enclosure base;
a link assembly fastened or fastenable to said enclosure base, said link assembly comprising a plurality of terminal pairs to which ends of cables are, in use, connected, and a plurality of upstanding spigot pairs between which mechanical linkages may, in use, be applied to connect the cables;
an enclosure cover that cooperates with the enclosure base to define an enclosure with openings for the cables;
a barrier unit engageable with said link assembly, the barrier unit being configured to surround said plurality of upstanding spigot pairs and any mechanical linkages that are, in use, present, and to provide a non-electrically conducting barrier between said spigot pairs and mechanical linkages; and
a lid that fits over the projecting part of the barrier unit and rests upon the upper surface of the enclosure cover.

The kit of parts may further include some or all of a supply of links for connection of the spigots of each spigot pair, a supply of clips or the like for fastening together the enclosure base and enclosure cover, closure caps for fill openings in the enclosure cover, and a supply of resin for filling of the enclosure.

Most preferably, the kit is supplied with the link assembly fastened to the enclosure base.

According to a yet further aspect of the invention, there is provided a method of assembling a link box for connecting electricity cables, which method comprises the steps of
a) providing an enclosure base having fastened thereto a link assembly, said link assembly comprising a plurality of terminal pairs and a plurality of upstanding spigot pairs between which mechanical linkages may, in use, be applied to connect the cables;
b) connecting the ends of the cables to said terminal pairs;
c) engaging a barrier unit with said link assembly, the barrier unit being configured to surround said plurality of upstanding spigot pairs and to provide a non-electrically conducting barrier between said spigot pairs;
d) fitting an enclosure cover to the enclosure base, so that the enclosure cover and enclosure base together define an enclosure with openings; and
e) filling said enclosure with a resin and causing or allowing the resin to cure, thereby forming a unitary body of solid resin that encapsulates the ends of the cables and the terminal pairs, the upstanding spigot pairs and the barrier unit protruding from the unitary body of solid resin;
steps c) and d) being carried out in any order.

Although the invention has been described above in relation to a link box of the "untailed" type, it will be appreciated that the link box may be factory-assembled by the method described and connected to lengths of cable, and then sold as a "pre-tailed" link box.

In order to enable the link box to be installed in a live electricity cable, each terminal and associated spigot plate is preferably insulated by a removable shroud having an opening for accommodating a cable core.

In this case, the step of connecting the ends of the cables to said terminal pairs preferably comprises the following sub-steps:
(i) removing a shroud from a terminal and associated spigot plate;
(ii) connecting a cable core of one of the cables to the exposed terminal;
(iii) replacing the previously removed shroud such that the terminal and associated spigot plate are insulated and the cable core is accommodated within the opening; and
(iv) connecting each of the remaining cable cores of the cables to a terminal by repeating sub-steps (i) to (iii) for each cable core.

So that the enclosure of the link box may be filled with resin which, when cured, forms a single unitary body of resin that encapsulates the cable ends, the connections of the cable ends to the terminal pairs, and the lower part of the barrier unit, each shroud preferably includes a removable portion that is situated between a lower portion of the shroud which covers the exposed surfaces of the terminal, and an upper portion of the shroud which covers an upper part of the spigot plate. The removable portion of the shroud is preferably defined by two lines of weakness, eg lines of perforations, and a tab is preferably provided that enables a user to separate the removable portion of the shroud from the remaining upper and lower portions of the shroud.

Once the cable cores have been connected to the appropriate terminals, the removable portions of the shrouds are preferably removed. The enclosure is then preferably filled with an insulating resin until the level of the resin is situated between the remaining upper and lower portions of the shroud, such that the upper portion of the shroud is removable from the spigot plate once the resin has cured. The upper portions of the shroud may be left in place, in order to keep the upper portion of the spigot plate clean, until the mechanical linkages are engaged with the spigot plates.

According to a further aspect of the invention, there is provided a method of connecting a plurality of electrical conductors to a terminal assembly, which method comprises the steps of
(a) providing a terminal assembly comprising a plurality of terminals, each terminal being adapted for connection to a conductor and being insulated by a removable shroud having an opening for accommodating a conductor, in use;
(b) removing a shroud from a terminal;
(c) connecting a conductor to the uncovered terminal;
(d) replacing the previously removed shroud such that the terminal is insulated and the conductor is accommodated within the opening; and
(e) connecting each of the remaining conductors to a terminal by repeating steps (b) to (d) for each cable core.

According to a further aspect of the invention, there is provided a terminal assembly for engagement with a plurality of electrical conductors, the terminal assembly comprising a plurality of terminals, each terminal being adapted for connection to a conductor and being insulated by a removable shroud having an opening for accommodating a conductor, in use.

The method and terminal assembly according to these aspects of the invention are advantageous principally because they enable live conductors to be connected to a terminal assembly. In particular, whilst a particular terminal is not covered by an insulating shroud, and a live conductor is being secured to that terminal, the insulating shrouds covering the other terminals ensure that arcing does not occur between the exposed terminal and a nearby terminal.

Each terminal preferably comprises a socket within which an end of a conductor, such as a cable core, may be mechanically fastened. Most preferably, the end of the conductor is fastened by means of a threaded clamping bolt, which most preferably has a head that shears off upon application of a predetermined torque. Each terminal may include further components, such as an upstanding spigot plate, that are also insulated by a removable shroud.

Each shroud may be formed of any material that is sufficiently effective as an electrical insulator, and is preferably formed of a material that is suitable for moulding into a relatively complex shape. Most preferably, however, each shroud is formed of a plastics material, such as polyethylene. Each shroud is preferably formed by injection moulding.

Each shroud is preferably adapted to cover all exposed surfaces of a terminal and any associated spigot plate. Most preferably, each shroud has an entrance at one end, and is adapted to receive, and slidably engage, the terminal and any associated spigot plate with a relatively close fit.

The opening for accommodating a conductor is preferably situated in a wall of the shroud, and is preferably located in registration with the socket of the terminal. The opening preferably extends from the edge of the shroud that defines its entrance, such that the shroud is adapted to engage a terminal having a conductor connected thereto by receiving the conductor within the opening. In this case, the opening preferably comprises an entrance part, most preferably having the form of narrow slit or slot, that extends from said edge of the shroud to an accommodating part of the opening that is adapted to accommodate the conductor.

The accommodating part of the opening is preferably adapted to accommodate a range of different sizes of conductor. In a presently preferred embodiment, the accommodating part of the opening comprises radially extending parts that define a plurality of deformable fingers of the shroud. Said deformable fingers are preferably adapted to deform outwardly to accommodate a range of different sizes of conductor, and are adapted to then be resiliently biased against the exterior surface of the conductor. Where the conductors are cable cores with only an end portion having no insulation sleeve, the exposed end portion of the cable core is preferably entirely enclosed within the shroud.

The invention will now be described in greater detail, by way of illustration only, with reference to the accompanying drawings, in which
Figure 1 is an exploded view of a link box according to a first embodiment of the present invention;
Figure 2 is an enlarged view of a link assembly forming part of the link box of Figure 1;
Figure 3 shows a barrier unit immediately prior to engagement of the barrier unit with the link assembly;
Figure 4 is a perspective view on a larger scale of the barrier unit after engagement with the link assembly;
Figure 5 is a schematic detailed view in section, showing the manner of engagement of the barrier unit with the link assembly;
Figure 6 shows an enclosure cover prior to engagement with the enclosure base;
Figure 7 shows the partially assembled link box, after engagement of the enclosure cover and enclosure base;
Figure 8 is a perspective view of the fully assembled link box;
Figure 9 is a side view of the fully assembled link box;
Figure 10 is a plan view of the fully assembled link box;
Figure 11 is a perspective view of a link assembly, which forms part of a second embodiment of a link box according to the present invention, before engagement with any conductors;
Figure 12 is an enlarged view of a shroud that forms part of the link assembly of Figure 11;
Figure 13 is a perspective view of the link assembly of the second embodiment during engagement with a first cable core;
Figure 14 is a perspective view of the link assembly of the second embodiment during engagement with a second cable core;
Figure 15 is a perspective view of the link assembly of the second embodiment engaged with six cable cores; and
Figure 16 is a perspective view of the link assembly of the second embodiment in which a removable band of each shroud of the link assembly has been removed.

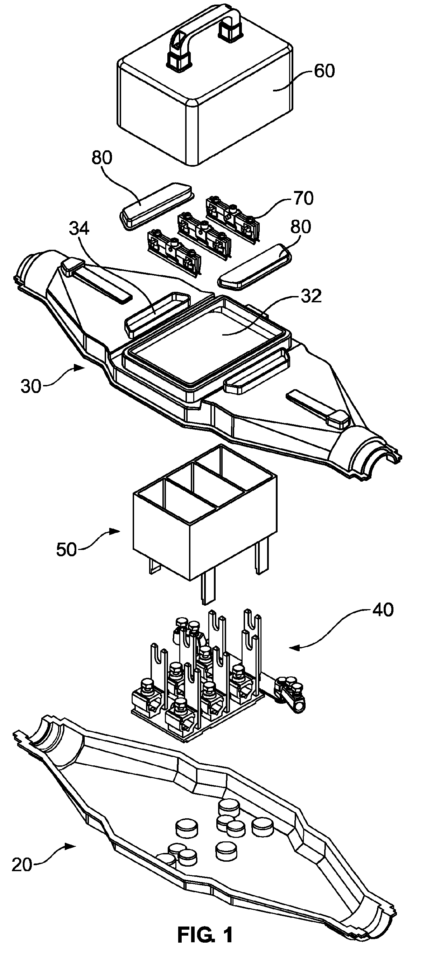

Referring first to Figure 1, a first embodiment of a link box according to the invention is generally designated 10. The link box 10 comprises a base tray 20, an upper enclosure member 30, a link assembly 40 (shown in Figure 1 separate from the base tray 20, but actually fastened to the base tray 20 as described further below), a barrier unit 50, a lid 60, a set of links 70 and a pair of closure caps 80 for fill openings 34 provided in the upper surface of the upper enclosure member 30.

The components enumerated in the preceding paragraph are supplied as a kit of parts for assembly on site to form a link box.

The base tray 20 and upper enclosure member 30 are both formed in clear plastics material by vacuum forming. The base tray 20 has a continuous, uninterrupted surface so that it will retain liquid resin poured into the assembled link box. The upper enclosure member 30 has a generally rectangular central aperture 32 that, as described below, accommodates upstanding parts of the link assembly 40 and the barrier unit 50. The upper enclosure member 30 is also formed with the fill openings 34, either side of the central aperture 32, through which resin may be poured into the assembled link box.

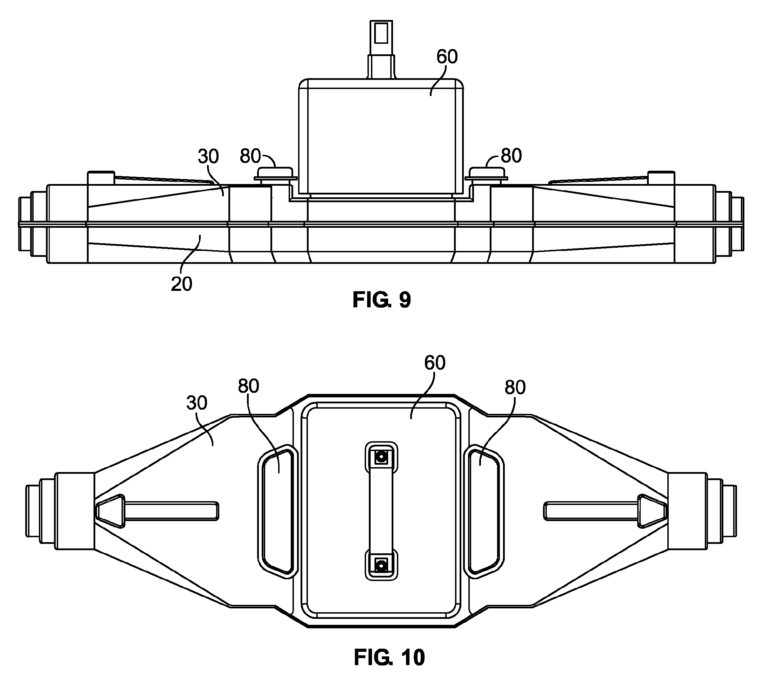

Both the base tray 20 and the upper enclosure member 30 taper to their ends, the end portions of each being semicircular in form, so that when the base tray 20 and upper enclosure member 30 are brought together to form a complete enclosure, circular openings are defined at each end of the enclosure, through which cables can extend into the link box 10. As is most clearly evident from Figures 8 and 9, the end portions have three, stepwise reducing, diameters. The extreme endmost portions of the base tray 20 and upper enclosure member 30 define openings suitable for a first standard diameter of cable. By trimming off the extreme end portions, however, openings appropriate for a second, larger diameter cable can be created, and by trimming off also the intermediate diameter portions, openings appropriate for a third, yet larger diameter cable can be formed.

In the following description, it is assumed that the cables that are used are of the smallest of the three standard diameters, and that therefore there is no need for any trimming of the end portions of the base tray 20 and upper enclosure member 30. For clarity, no cables are shown in any of the drawings.

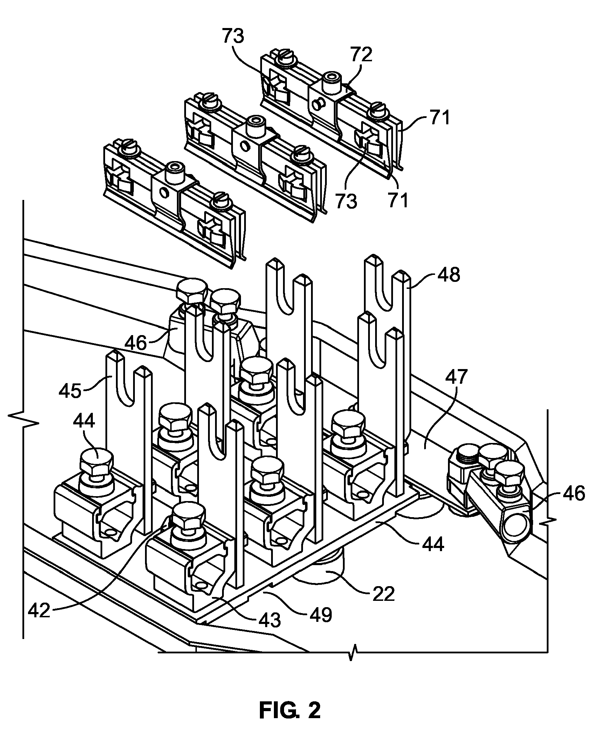

Referring now to Figure 2, the link assembly 40 comprises a support plate 41 that is moulded in highly non-conductive plastics material and rests upon a number of upstanding protrusions 22 formed in the base tray 20. The support plate 41 is fastened to the base tray 20 by means of two bolts 42 (one of which is just visible in Figure 2). Three pairs of terminals 43 are fastened to the support plate 41. Each terminal 43 is of generally conventional form, comprising a socket within which the exposed end of a cable core is received and a shear-head clamping bolt 44 by means of which the cable end can be clamped within the socket.

Upstanding spigot plates 45 are bolted to each of the six terminals 43. The tips of the spigot plates 45 have a U-shaped form, so as engage with industry-standard links 70 that are also shown in Figure 2.

The link assembly 40 also comprises a pair of CNE terminals 46 for CNE conductors of the cables that are to be joined by the link box. These CNE terminals 46 are connected by a busbar 47 from which a further spigot plate 48 is upstanding.

The links 70 comprise a pair of plates 71 with outwardly flared lower edges . The plates 71 are biased together by spring clips 72 and are restricted in the extent to which they can separate from each other by cross-members 73. The links 70 can be engaged with the upstanding spigot plates 45 by pressing the links 70 down onto the tips of a pair of spigot plates 45. The spigot plates 45 force the plates 71 of the link 70 apart, against the action of the spring clip 72, the cross-members 73 being received within the U-shaped recesses in the tips of the spigot plates 45. When the link 70 is engaged in this manner with the spigot plates 45, electrical connection between the terminals 43 at the foot of the spigot plates 45, and hence between the cable cores clamped within those terminals, is achieved. Removal of the link 70 breaks that connection.

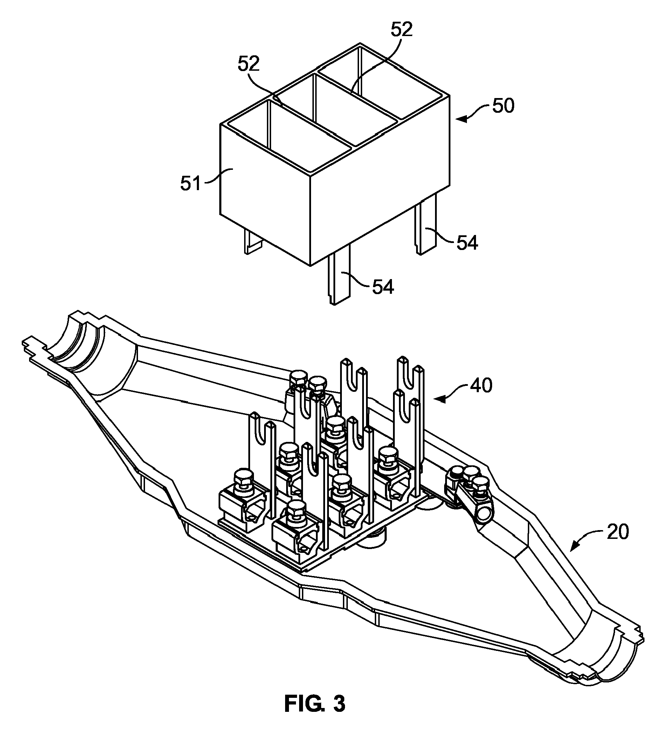

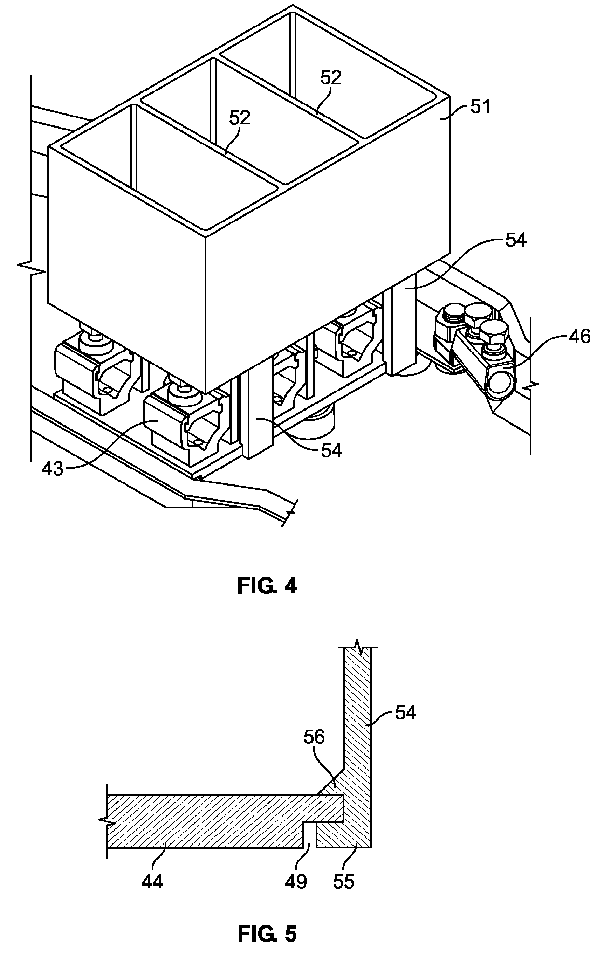

Figure 3 shows the barrier unit 50 and the manner in which the barrier unit 50 is engaged with the link assembly 40. The barrier unit 50 comprises a main body 51 that is generally of rectangular box section and the upper and lower faces of which are open. The main body 51 is divided into three compartments of equal size by two partitions 52. Four legs 54 depend downwardly from the main body 51 . The ends of the legs 54 are each formed with a pair of inwardly directed lugs 55,56 (see Figure 5) that engage the support plate 41 with a snap fit. The first lug 55, which is positioned at the extreme tip of the leg 54 engages in a recess 49 (see Figure 2) formed in the underside of the support plate 41, while the other lug 56 bears against the upper surface of the support plate 41. The spacing of the lugs 55,56 is such that the support plate 41 is captivated with a close fit between them, so that the barrier unit 50 is held substantially immobile, with the main body being spaced from the support plate 41 by the legs 54 and with the spigot plates 45 extending into the compartments of the main body 51. The partitions 52 act as insulating barriers between the pairs of spigot plates 45 and links 70 associated with each pair of connected cable cores.

The manner in which the link box is assembled will now be described, using the example of installation of the link box in an established three-core cable.

First, a trench is excavated around the cable at the position at which the link box is to be installed, and an underground chamber is constructed in conventional manner at that location. The cable is severed, the outer insulation of each end of the severed cable stripped off to enable the three cable cores to be separated and the insulation of each core stripped off the end of each core. Because the cable cores may be relatively inflexible and hard to manipulate, a template may be supplied with the kit of parts for the link box, the template enabling the fitter to arrange the cores in the appropriate configuration for connection to the terminals 43 of the link assembly. The template may be discarded after use.

Once the cable cores have been prepared, the base tray 20, to which is fastened the link assembly 40, is introduced into the underground chamber and positioned beneath the cables. The exposed ends of each cable core are inserted into the sockets of the terminals 43 and clamped in position by rotation of the shear head bolts 44. Care is obviously taken to ensure that corresponding cores (the insulation on which is generally colour-coded) are connected to the two terminals 43 of each terminal pair. Stranded CNE conductors of each part of the cable are connected to the CNE terminals 46.

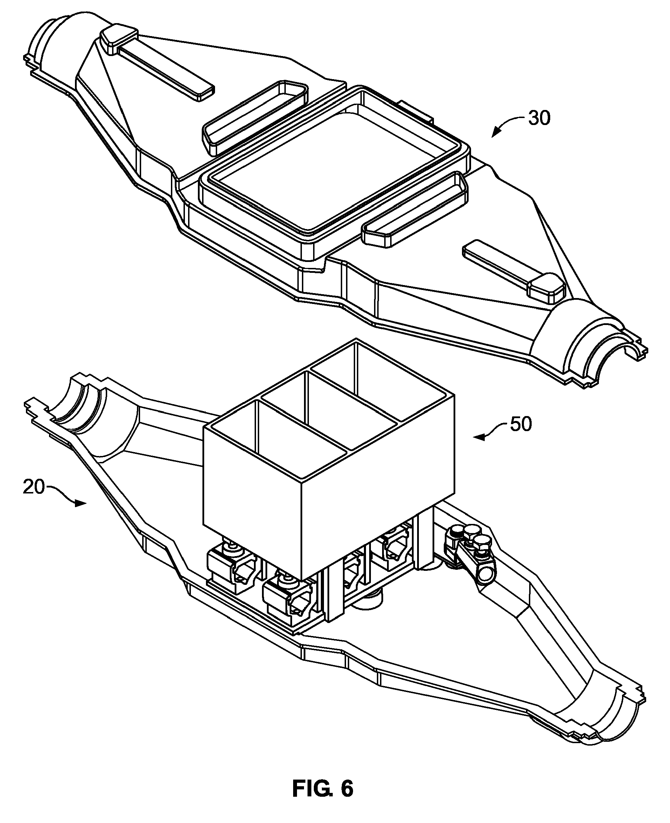

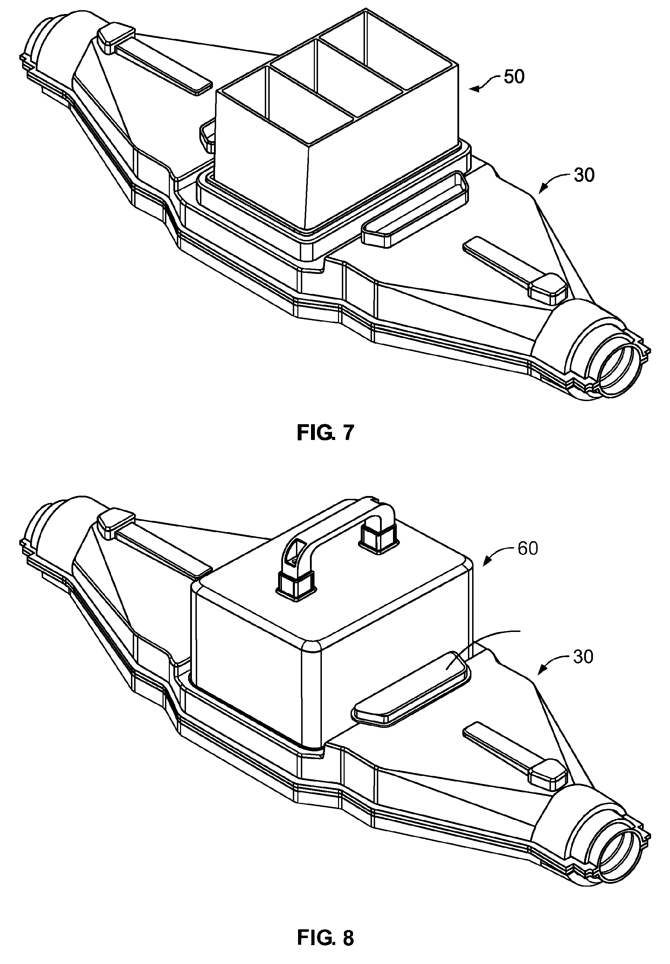

After all the cable cores have been connected as described above, the barrier unit 50 is pressed into engagement with the link assembly 40 (Figures 3 and 4). The upper enclosure member 30 is then placed over the base tray 20 such that the barrier unit 50 projects through the central aperture 32 (Figures 6 and 7). The lateral edges of the base tray 20 and upper enclosure member 30 are formed as outwardly-directed flanges 24,36 that come into abutment and are then fastened together by means of spring clips (not shown). The flanges 24,36 of one or both of the base tray 20 and upper enclosure member 30 may be provided with a gasket tape to improve the seal between them. The barrier unit 50 may alternatively be engaged with the link assembly 40 after the upper enclosure member 30 is placed over the base tray 20.

A liquid curable resin is prepared in conventional manner and then poured into the enclosure through one or both of the fill openings 34 in the upper enclosure member 30. The liquid resin is added until the enclosure is full and the liquid level reaches that of the fill openings 34. The resin is then allowed to cure, which typically takes approximately twenty minutes. Once cured, the resin forms a unitary block of solid material that encapsulates the connections between the cable cores and the terminals 43, as well as the lower parts of the spigot plates 45.

The upper parts of the spigot plates 45 project from the unitary body of cured resin into the compartments of the main body 51. Electrical connection between the severed parts of the cable can then be re-established by fitting the links 70 to the spigot plates 45.

If not already done, the fill openings 32 can then be closed by application of the closure caps 80, and the link box is completed by placement of the lid 60 over the projecting barrier unit 50 (Figure 8).

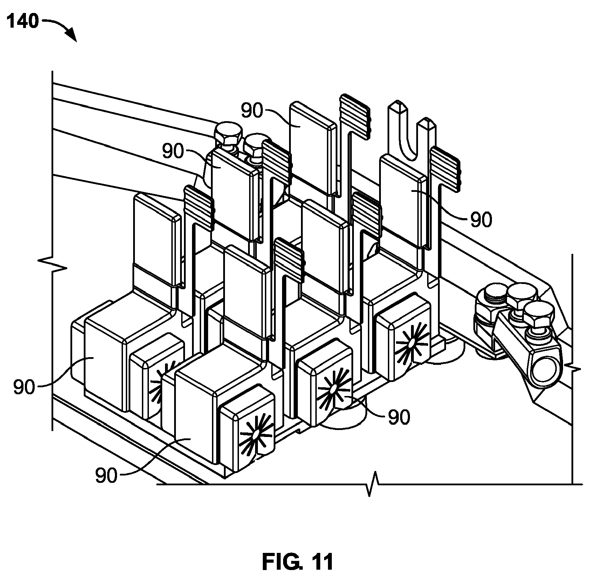

A second embodiment of the link box according to the invention will now be described. The second embodiment is suitable for installation in a live cable. The second embodiment of the link box according to the invention differs from the first embodiment 10 in that the link assembly 140 of the second embodiment has an insulating shroud 90 for each terminal 143 and associated spigot plate 145 of the link assembly 140. Figure 11 shows the link assembly 140 of the second embodiment before assembly and installation of the link box.

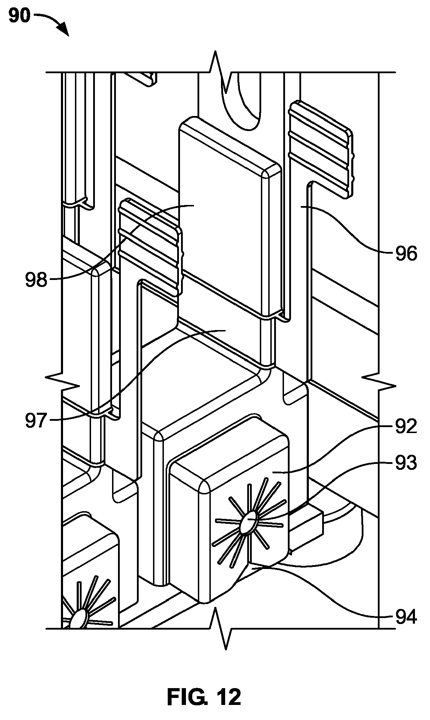

The insulating shrouds 90 of the link assembly 140 are all identical in form, and are injection moulded in polyethylene. An enlarged view of one of the insulating shrouds 90 is shown in Figure 12. Each insulating shroud 90 has an opening at one end, and is configured and dimensioned to receive, and slidably engage, a terminal 143 and associated spigot plate 145 such that the shroud 90 covers the exposed surfaces of the terminal 143 and associated spigot plate 145 when fully engaged.

Each insulating shroud 90 comprises a lower portion that covers the exposed surfaces of the terminal 143, the openings into the terminal socket, and the adjacent exposed surfaces of the associated spigot plate 145, and an upper portion that covers the exposed surfaces of that part of the associated spigot plate 145 that projects beyond the terminal 143. Each insulating shroud 90 is adapted to receive a terminal 143 and associated spigot plate 145 with a relatively close fit, save for enlarged side portions 92 of each insulating shroud 90 that cover the openings into the terminal socket, when engaged therewith. The enlarged side portions 92 of each insulating shroud 90 are cuboidal in form, and include an opening 93 that is adapted to accommodate a conductor engaged with the terminal 143, as described in more detail below.

The opening 93 comprises a central circular portion with equiangularly-spaced, radial slots extending outwardly therefrom. The radial slots of the opening 93 define a plurality of inwardly-extending, tapered fingers that are deformable such that the opening 93 can accommodate conductors having a range of different sizes. One of the radial slots is of increased length, and extends from the circular portion of the opening 93 to the edge of the enlarged side portion 92 at the open end of the shroud 90. A V-shaped recess 94 is formed in the edge of the enlarged side portion 92 at the open end of the shroud 90 such that it connects, at its tip, with the extreme end of the radial slot of increased length.

The upper portion of each insulating shroud 90 has two continuous lines of perforations that together define a band 97 of the insulating shroud 90, approximately 20mm in width and situated at the lower end of the upper portion, that is removable from the remainder of the shroud 90. The insulating shroud 90 further comprises an integrally-formed tab 96 that extends from the removable band 97, upwardly alongside the upper portion of the shroud 90, before terminating above the upper end of the shroud 90 with an enlarged portion that constitutes a grip. The removable band 97 also has a line of perforations that extends across a width of the band 97, immediately adjacent to the tab 96.

The manner in which the second embodiment is assembled and installed differs from the manner in which the first embodiment 10 is assembled and installed principally in that the method of connecting conductors to the link assembly 140 of the second embodiment enables the conductors to be live during installation. A method of connecting cable cores 100 of an established three-core cable to the link assembly 140 of the second embodiment is described below.

As for the first embodiment, the cable cores 100 are prepared by severing the cable, stripping the outer insulation of each end of the severed cable to enable the three cable cores 100 to be separated, and stripping the insulation from an end portion of each cable core 100.

Before any cable cores 100 are connected to the link assembly 140 of the second embodiment, the link assembly 140 is arranged as shown in Figure 11 such that each terminal 143 and associated spigot plate 145 is enclosed by an insulating shroud 90.

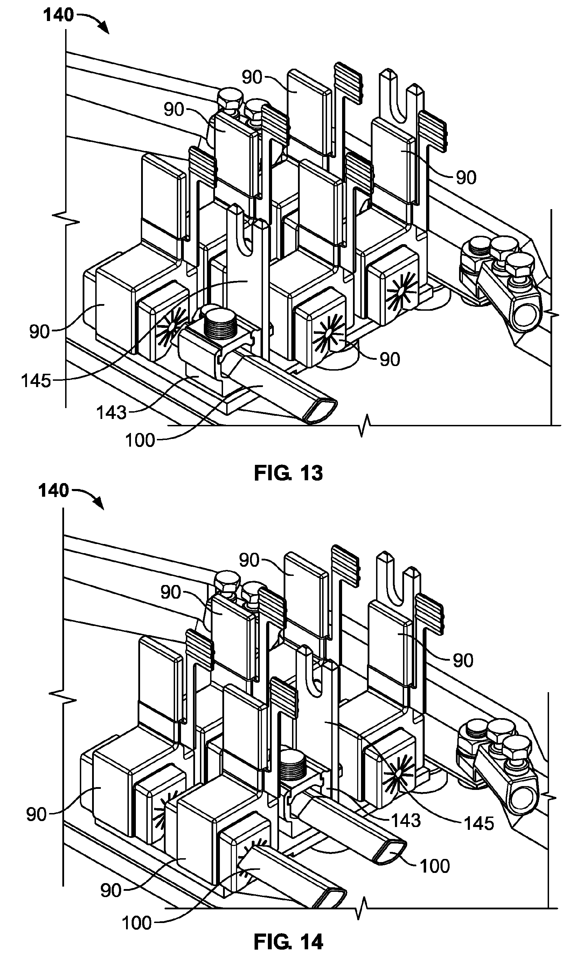

Firstly, one of the insulating shrouds 90 is removed from the link assembly 140 so as to uncover a terminal 143 and associated spigot plate 145. The exposed end of a first cable core 100 is then inserted into the socket of the uncovered terminal 143 and clamped in position by rotation of a shear head bolt. This configuration is shown in Figure 13.

The removed insulating shroud 90 is then slidably re-engaged with the uncovered terminal 143 and associated spigot plate 145, with an insulated part of the cable core 100 being urged through the recess 94 and associated radial slot of the shroud 90 before being received within the central circular portion of the opening 93. The fingers defined by the opening 93 are deformed outwardly by this action and are resiliently biased against the exterior surface of the cable core 100. In this way, the exposed end portion of the cable core 100 is completely enclosed within the shroud 90, and hence insulated from other terminals 143 and associated spigot plates 145.

The insulating shroud 90 of the adjacent terminal 143 and associated spigot plate 145 is then removed, and a second cable core 100 is inserted into the socket of the uncovered terminal 143 and clamped in position by rotation of a shear head bolt. This configuration is shown in Figure 14.

This method is repeated with each of the remaining terminals 143, ensuring that only one terminal 143 and associated spigot plate 145 is uncovered at any one time.

Whilst a particular terminal 143 and associated spigot plate 145 are not covered by an insulating shroud 90, and a live cable core 100 is being secured to that terminal 143, the insulating shrouds 90 covering the other terminals 143 and associated spigot plates 145 ensure that arcing does not occur between the uncovered terminal 143 and associated spigot plate 145, and a nearby terminal 143 or spigot plate 145.

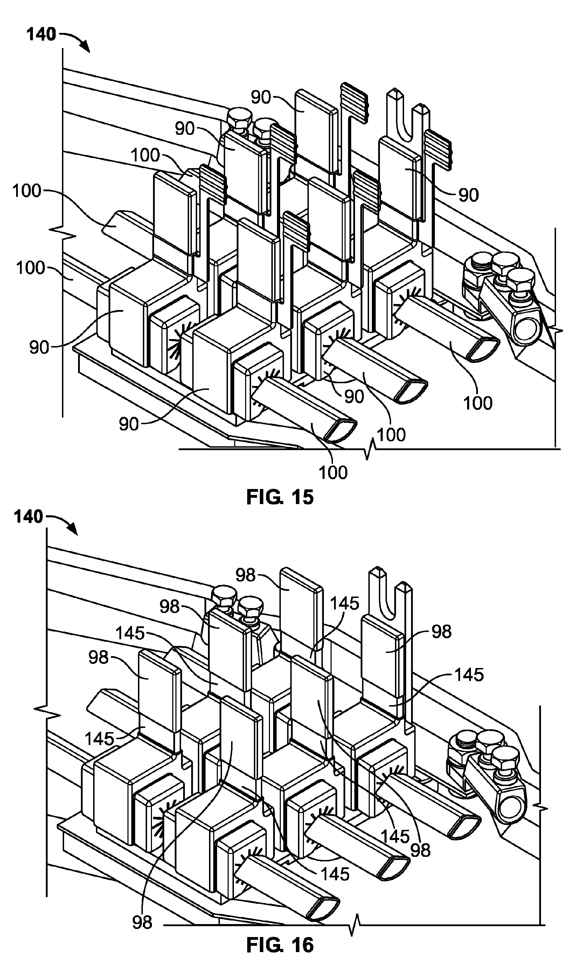

Once the three cable cores 100 of each end of the severed cable have been secured to the link assembly 140, the link assembly 140 has the configuration shown in Figure 15.

The removable bands 97 of the insulating shrouds 90 are then removed using the tabs 96 to break the perforations. Each shroud 90 is thereby separated into a lower part that encloses a terminal 143, and an upper, removable part 98 that encloses an upper part of the associated spigot plate. Between the upper and lower parts of each shroud 90, a section of the spigot plate 145 is exposed. This configuration is shown in Figure 16.

The method of assembly and installation is thereafter identical to that of the first embodiment save that the liquid curable resin is added until the liquid level is situated between the upper and lower parts of the shroud 90. The resin is then allowed to cure, so that the resin forms a unitary block of solid material that encapsulates the connections between the cable cores 100 and the terminals 143, and the lower parts of the spigot plates 145, including the lower parts of the insulating shrouds 90.

The upper parts of the spigot plates 145, and the upper parts of the insulating shrouds 90, project from the unitary body of cured resin. The upper parts of the insulating shrouds 90 may be left in place, in order to keep the contacts clean, until electrical connection between the severed parts of the cable is re-established by fitting links to the spigot plates 145.

## Claims

1. A link box (10) for connecting electricity cables, the link box (10) comprising
an enclosure,
a link assembly (40,140) mounted within said enclosure, said link assembly (40,140) comprising a plurality of terminal pairs (43,143) to which ends of the cables are, in use, connected, and a plurality of upstanding spigot pairs (45,145) between which mechanical linkages (70) may, in use, be applied to connect the cables, and
a barrier unit (50) engageable with said link assembly (40,140), the barrier unit (50) being configured to surround said plurality of upstanding spigot pairs (45,145) and any mechanical linkages (70) that are, in use, present, and to provide a non-electrically conducting barrier between said spigot pairs (45,145) and mechanical linkages (70).

2. A link box (10) as claimed in Claim 1, wherein the link assembly (40,140) comprises a support (41) of highly non-conductive material, most preferably a plastics material.

3. A link box (10) as claimed in Claim 2, wherein the terminal pairs (43,143) and upstanding spigot pairs (45,145) are mechanically fastened to the support (41), and the support (41) is fixed to a base component (20) of the enclosure.

4. A link box (10) as claimed in any preceding claim, wherein the lower ends of the spigots (45,145) are connected directly to the terminals (43,143).

5. A link box (10) as claimed in any preceding claim, wherein the barrier unit (50) is formed in an electrically non-conducting material, most preferably a plastics material.

6. A link box (10) as claimed in Claim 5, wherein the barrier unit (50) is formed by injection moulding of fibre-reinforced plastics, eg glass fibre-reinforced polypropylene.

7. A link box (10) as claimed in any preceding claim, wherein the barrier unit (50) takes the form of a hollow, rectangular body (51), with open upper and lower faces and with transverse partitions (52) that divide the interior of the body (51) into a plurality of compartments.

8. A link box (10) as claimed in any preceding claim, wherein the barrier unit (50) is engageable with the link assembly (40,140) with a snap or clip fit.

9. A link box (10) as claimed in Claim 8, wherein the barrier unit (50) is provided with a plurality of legs (54) that depend downwardly from the body (51).

10. A link box (10) as claimed in Claim 9, wherein the ends of the legs (54) cooperate with suitable formations on the link assembly (10), most preferably on the support (41), to secure the barrier unit (50) to the link assembly (40,140).

11. A link box (10) as claimed in Claim 10, wherein the ends of the legs (54) are formed with inwardly projecting lugs that engage the support (41) with a snap or clip fit, some or all of the lugs locating in corresponding openings or recesses in the support (41).

12. A link box (10) as claimed in any one of Claims 9 to 11, wherein the length of the legs (54) is such that, when the barrier unit (50) has been engaged with the link assembly (40,140), the body (51) is positioned such that, when the enclosure is filled with resin, the resin encapsulates the lower part of the body (51), but the greater part of the body (51) protrudes from the resin.

13. A link box (10) as claimed in any preceding claim, wherein each terminal (43,143) and associated spigot plate (45,145) is insulated by a removable shroud (90) having an opening (93) for accommodating a cable core (100).

14. A kit of parts, the kit of parts comprising
an enclosure base (20);
a link assembly (40,140) fastened or fastenable to said enclosure base (20), said link assembly (40,140) comprising a plurality of terminal pairs (43,143) to which ends of cables are, in use, connected, and a plurality of upstanding spigot pairs (45,145) between which mechanical linkages (70) may, in use, be applied to connect the cables;
an enclosure cover (30) that cooperates with the enclosure base (20) to define an enclosure with openings for the cables;
a barrier unit (50) engageable with said link assembly (40,140), the barrier unit (50) being configured to surround said plurality of upstanding spigot pairs (45,145) and any mechanical linkages (70) that are, in use, present, and to provide a non-electrically conducting barrier (50) between said spigot pairs (45,145) and mechanical linkages (70); and
a lid (60) that fits over the projecting part of the barrier unit (50) and rests upon the upper surface of the enclosure cover (30).

15. A kit as claimed in Claim 14, wherein the kit further includes some or all of a supply of links (70) for connection of the spigots (45,145) of each spigot pair (45,145), a supply of clips or the like for fastening together the enclosure base and enclosure cover, closure caps (80) for fill openings in the enclosure cover, and a supply of resin for filling of the enclosure.

16. A kit as claimed in Claim 14 or Claim 15, wherein the kit is supplied with the link assembly (40,140) fastened to the enclosure base (20).

17. A kit as claimed in any one of Claims 14 to 16, wherein each terminal (43,143) and associated spigot plate (45,145) is insulated by a removable shroud (90) having an opening (93) for accommodating a cable core (100).

18. A method of assembling a link box (10) for connecting electricity cables, which method comprises the steps of
a) providing an enclosure base (20) having fastened thereto a link assembly (40,140), said link assembly (40,140) comprising a plurality of terminal pairs (43,143) and a plurality of upstanding spigot pairs (45,145) between which mechanical linkages (70) may, in use, be applied to connect the cables;
b) connecting the ends of the cables to said terminal pairs (43,143);
c) engaging a barrier unit (50) with said link assembly (40,140), the barrier unit (50) being configured to surround said plurality of upstanding spigot pairs (45,145) and to provide a non-electrically conducting barrier (50) between said spigot pairs (45,145);
d) fitting an enclosure cover (30) to the enclosure base (20), so that the enclosure cover (30) and enclosure base (20) together define an enclosure with openings; and
e) filling said enclosure with a resin and causing or allowing the resin to cure, thereby forming a unitary body of solid resin that encapsulates the ends of the cables and the terminal pairs (43,143), the upstanding spigot pairs (45,145) and the barrier unit (50) protruding from the unitary body of solid resin;
steps c) and d) being carried out in any order.

19. A method as claimed in Claim 18, wherein each terminal (143) and associated spigot plate (145) is insulated by a removable shroud (90) having an opening (93) for accommodating a cable core (100), and the step of connecting the ends of the cables to said terminal pairs (143) comprises the following sub-steps:
(i) removing a shroud (90) from a terminal and associated spigot plate (145);
(ii) connecting a cable core (100) of one of the cables to the exposed terminal (143);
(iii) replacing the previously removed shroud (90) such that the terminal (143) and associated spigot plate (145) are insulated and the cable core (100) is accommodated within the opening (93); and
(iv) connecting each of the remaining cable cores (100) of the cables to a terminal (143) by repeating sub-steps (i) to (iii) for each cable core (100).

20. A method as claimed in Claim 19, wherein each shroud (90) includes a removable portion (97) that is situated between a lower portion of the shroud which covers the exposed surfaces of the terminal (143), and an upper portion of the shroud (90) which covers an upper part of the spigot plate (145); and wherein once the cable cores (100) have been connected to the appropriate terminals (143), the removable portions (97) of the shrouds (90) are removed, and the enclosure is filled with a resin until the level of the resin is situated between the remaining upper and lower portions of the shroud (90), such that the upper portion of the shroud is removable from the spigot plate (145) once the resin has cured.

21. A terminal assembly (140) for engagement with a plurality of electrical conductors, the terminal assembly (140) comprising a plurality of terminals (143), each terminal (143) being adapted for connection to a conductor (100) and being insulated by a removable shroud (90) having an opening (93) for accommodating a conductor (100), in use.

22. A terminal assembly (140) as claimed in Claim 21, wherein each shroud (90) is adapted to cover all exposed surfaces of the terminal (143).

23. A terminal assembly (140) as claimed in Claim 22, wherein each shroud (90) has an entrance at one end, and is adapted to receive, and slidably engage, the terminal (143) with a relatively close fit.

24. A terminal assembly (140) as claimed in any one of Claims 21 to 23, wherein the opening (93) for accommodating a conductor (100) is situated in a wall of the shroud (90), and is located in registration with a socket of the terminal (143).

25. A terminal assembly (140) as claimed in Claim 24, wherein the opening (93) extends from the edge of the shroud (90) that defines its entrance, such that the shroud (90) is adapted to engage a terminal (143) having a conductor (100) connected thereto by receiving the conductor (100) within the opening (93).

26. A terminal assembly (140) as claimed in Claim 25, wherein the opening (93) comprises an entrance part (94) that extends from said edge of the shroud (90) to an accommodating part of the opening (93) that is adapted to accommodate the conductor (100).

27. A terminal assembly (140) as claimed in Claim 26, wherein the accommodating part of the opening (93) is adapted to accommodate a range of different sizes of conductor (100).

28. A terminal assembly (140) as claimed in Claim 27, wherein the accommodating part of the opening (93) comprises radially extending parts that define a plurality of deformable fingers of the shroud (90).

29. A terminal assembly (140) as claimed in Claim 28, wherein said deformable fingers are adapted to deform outwardly to accommodate a range of different sizes of conductor (100), and are adapted to then be resiliently biased against the exterior surface of the conductor (100).

30. A method of connecting a plurality of electrical conductors (100) to a terminal assembly (140), which method comprises the steps of
(a) providing a terminal assembly (140) according to any one of Claims 21 to 29;
(b) removing a shroud (90) from a terminal (143);
(c) connecting a conductor (100) to the uncovered terminal (143);
(d) replacing the previously removed shroud (90) such that the terminal (143) is insulated and the conductor (100) is accommodated within the opening (93); and
(e) connecting each of the remaining conductors (100) to a terminal (143) by repeating steps (b) to (d) for each conductor (100).
